# EUROPÄISCHE PATENTANMELDUNG

(11) **EP 4 624 067 A1**
(43) Veröffentlichungstag der Anmeldung: **01.10.2025**
(21) Anmeldenummer: 25163507.4
(22) Anmeldetag: 13.03.2025
(51) Int. Cl.: B21D 39/04

(54) **VORRICHTUNG ZUM ANBRINGEN EINER ARMATUR ENDSEITIG AN EINEM SCHLAUCH**

(30) Priorität: 26.03.2024 DE 102024108643
(71) Anmelder: Uniflex-Hydraulik GmbH, 61184 Karben (DE)
(72) Erfinder: SCHNELL, Alexander, 61209 Echzell (DE)
(74) Vertreter: Grättinger Möhring von Poschinger Patentanwälte Partnerschaft mbB

(57) **Zusammenfassung**

Eine Vorrichtung zum Anbringen einer Armatur (1) endseitig an einem Schlauch umfasst eine Klemmeinrichtung (12) für den Schlauch, einen Halter (13) für die Armatur (1) und einen Antriebsmechanismus (14) zum Bewegen des Armatur-Halters (13) relativ zu der Schlauch-Klemmeinrichtung (12) zumindest im Wesentlichen parallel zur Achse eines in der Schlauch-Klemmeinrichtung (12) aufgenommenen Schlauches. Dabei umfasst die Schlauch-Klemmeinrichtung (12) mindestens zwei Klemmbacken (18), die sich jeweils mittels einer Parallellenkeranordnung (22) bewegbar an einem Widerlager (23) abstützen, wobei die Widerlager (23) ihrerseits Teile einer Grundstruktur (2) sind, auf welche der Antriebsmechanismus (14) einwirkt. Ferner sind ein Klemmbacken-Verstellmechanismus sowie ein die Bewegung der Klemmbacken (18) spiegelsymmetrisch koordinierender Synchronisierungsmechanismus vorgesehen. Und wischen dem Klemmbacken-Verstellmechanismus und den Klemmbacken (18) wirkt ein Freilauf dergestalt, dass eine über die von dem Klemmbacken-Verstellmechanismus vorgegebene Stellung hinausgehende Annäherung der Klemmbacken (18) zueinander möglich ist.

## Beschreibung

Die vorliegende Erfindung betrifft eine Vorrichtung zum Anbringen einer Armatur endseitig an einem Schlauch, umfassend eine Klemmeinrichtung für den Schlauch, einen Halter für die Armatur und einen Antriebsmechanismus zum Bewegen des Armatur-Halters relativ zu der Schlauch-Klemmeinrichtung zumindest im Wesentlichen parallel zur Achse eines in der Schlauch-Klemmeinrichtung aufgenommenen Schlauches.

Namentlich für die Herstellung von Hydraulikleitungen werden - gemäß einer lange bekannten und praktizierten Vorgehensweise - mit einem mit der erforderlichen Länge von einem Vorrat abgeschnittenen Schlauchabschnitt endseitig zwei Armaturen durch Radialverpressen fest verbunden. Vor der Radialverpressung müssen allerdings die betreffenden Armaturen erst an dem Schlauchabschnitt angebracht, d. h. auf diesen aufgesetzt werden. Das Einbringen des Schlauchabschnitts in den Ringspalt, wie er bei typischen Armaturen zwischen dem - innen in den Schlauch einzuschiebenden - "Nippel" und der - außen auf den Schlauch aufzuschiebenden - "Hülse" besteht, ist - je nach der individuellen Hydraulikleitung - allerdings mit einem nicht unerheblichen Kraftaufwand verbunden.

Vor diesem Hintergrund sind im Stand der Technik Vorrichtungen der eingangs angegebenen Art bekannt, und zwar sowohl aus der Praxis - vgl. beispielsweise die sog. "Nippeleinstoßgeräte" UNE 10 und UNE 115 der Anmelderin - als auch aus der Patentliteratur. Insoweit einschlägige Veröffentlichungen sind namentlich die US 3 675 303 A, US 4 811 441 A, US 5 075 946 A, US 6 658 711 B1, US 7 322 085 B1, US 7 665 718 B1, KR 10-1695309 B1 und DE 83 05 240 U1. Nach der US 3 675 303 A wird der Schlauch mittels einer um ihn herumgelegten Schlinge aus einem durch Pneumatikzylinder spannbaren Streifen eines Materials mit hoher Reibung fixiert. Gemäß der US 4 811 441 A, US 6 658 711 B1, US 7 322 085 B1 und US 7 665 718 B1 erfolgt das Fixieren des Schlauches in der Klemmeinrichtung durch eine mittels eines Hebels betätigbare Exzenter-Klemmbacke, wobei die beiden zuletzt genannten Dokumente für das Fixieren des Schlauches alternativ auch Klemmeinrichtungen nach Art einer Curryklemme, d. h. mit zwei spiegelbildlich angeordneten, um jeweils eine Achse schwenkbaren, gegen den eingelegten Schlauch federvorgespannten Exzenter-Klemmbacken offenbaren. Nach der DE 83 05 240 U1 weist die Klemmeinrichtung zwei um jeweils eine Achse schwenkbare Lagerböcke mit Klemmbacken auf, welche - zur Anpassung an den jeweiligen Schlauchdurchmesser - mehrere unterschiedlich ausgeführte Auskehlungen aufweisen und in den Lagerböcken drehbar gelagert sind. Die Schwenkbewegungen der beiden Lagerböcke um ihre Lagerachsen sind über ein mit den Lagerböcken zusammenwirkendes Gleitstück synchronisiert, wobei auf das Gleitstück eine Vorspannfeder wirkt, welche die Lagerböcke im Sinne einer Anlage der Klemmbacken an den Schlauch vorspannt. Bei sämtlichen vorgenannten Klemmeinrichtungen mit Klemmbacken sind die Schwenkachsen der Klemmbacken - bzw. bei der DE 83 05 240 U1 der Lagerböcke - im Sinne einer die Anpresskraft der Klemmbacken an dem Schlauch erhöhenden Kinematik ("Selbsthemmung") in Richtung der auf den Schlauch wirkenden Längskraft hinter der jeweiligen Kontaktzone der Klemmbacken mit dem Schlauch angeordnet.

Die vorliegende Erfindung ist darauf gerichtet, eine verbesserte Vorrichtung der eingangs genannten Art bereitzustellen, die sich insbesondere für die der Radialverpressung vorausgehende Vorkonfektionierung von Hydraulikleitungen mit besonders großem Querschnitt eignet.

Gelöst wird die vorstehend angegebene Aufgabenstellung, indem bei einer Vorrichtung der eingangs angegebenen Art
- die Schlauch-Klemmeinrichtung mindestens zwei Klemmbacken umfasst, die sich jeweils mittels einer Parallellenkeranordnung bewegbar an einem Widerlager abstützen, wobei die Widerlager ihrerseits Teile einer Grundstruktur sind, auf welche der Antriebsmechanismus einwirkt,
- ein Klemmbacken-Verstellmechanismus sowie ein die Bewegung der Klemmbacken spiegelsymmetrisch koordinierender Synchronisierungsmechanismus vorgesehen sind und
- zwischen dem Klemmbacken-Verstellmechanismus und den Klemmbacken ein Freilauf dergestalt wirkt, dass eine über die von dem Klemmbacken-Verstellmechanismus vorgegebene Stellung hinausgehende Annäherung der Klemmbacken zueinander möglich ist.

Demnach zeichnet sich die erfindungsgemäße Vorrichtung durch mehrere untereinander sowie mit den grundsätzlichen, bekannten Charakteristika der hier in Rede stehenden Vorrichtungen synergistisch zusammenwirkenden technischen Besonderheiten aus, wobei eben aus jenem Zusammenwirken der strukturellen Besonderheiten die herausragende praktische Brauchbarkeit der Vorrichtung resultiert. Von besonderer Bedeutung ist insoweit unter anderem, dass sich eine bedarfsabhängige, d. h. von der für das Ein- bzw. Aufpressen der Armatur in bzw. auf das Schlauchende erforderlichen Einpresskraft abhängige, das Fixieren des Schlauches bewirkende Klemmkraft einstellt. Der Klemmbacken-Verstellmechanismus dient nämlich nicht dazu, um auf die Klemmbacken die für die Fixierung des Schlauches mittels der Klemmbacken während des Aufpressens der Armatur erforderliche Klemmkraft aufzubringen; vielmehr dient er (nur) dazu, die Klemmbacken zur Anlage an den Schlauch zu bringen mit einer solchen Anlagekraft, dass bei einer (beim Ein-/Aufpressen der Armatur) axial auf den Schlauch wirkenden Kraft und einer entsprechenden Ausweichbewegung des Schlauches längs seiner Achse die Klemmbacken - infolge des Reibschlusses zwischen Schlauch und Klemmbacken sowie der Geometrie der Parallellenkeranordnungen - mit einer von der Ein-/Aufpresskraft abhängigen Klemmkraft gegen den Schlauch gepresst werden. Hier kommt der erfindungsgemäß vorgesehene Freilauf zum Tragen, bedingt durch den die Klemmbacken sich über die von dem Klemmbacken-Verstellmechanismus vorgegebene Stellung hinausgehend zueinander (und an die Achse des Schlauches bzw. die Maschinenachse) annähern können. Die Wirkung des "Freilaufs" besteht, mit anderen Worten, demgemäß darin, dass sich die Klemmbacken - gemäß der Kinematik der Parallellenker-Anordnung - frei, ohne Zutun bzw. Mitwirkung oder Unterstützung des Klemmbacken-Verstellmechanismus' über die durch letzteren vorgegebene Stellung hinaus in Richtung auf die Achse des Schlauches (Klemmrichtung) bewegen können. Bei zunehmender Einpresskraft steigt auch die Klemmkraft an. Auf eher weiche Schläuche, die sich durch geringere Kräfte verformen lassen als festere/härtere Schläuche und somit dem Anbringen der Armatur typischerweise einen geringeren Widerstand entgegensetzen als letztere, wirken auf diese Weise automatisch nur vergleichsweise geringere Klemmkräfte ein, was einer unnötigen und/oder unzulässigen Verformung entgegenwirkt. Zugleich wird, indem die Aufhängung der Klemmbacken über jeweils zwei Parallellenkeranordnungen eine (bei sämtlichen Beanspruchungen bestehende) Parallelität der beiden Klemmbacken zueinander und zu der Bewegungsrichtung des Antriebsmechanismus' bewirkt, einem Ausbrechen des Schlauches infolge der axial auf ihn einwirkenden Kräfte entgegengewirkt. Einer ein derartiges Ausbrechen begünstigenden außermittigen Krafteinwirkung auf den Schlauch wird im Übrigen durch die Koordinierung/Synchronisierung der Bewegung der Klemmbacken dergestalt, dass diese sich spiegelbildlich-symmetrisch bewegen, entgegengewirkt.

Die durch den Freilauf vorgesehene freie Bewegbarkeit der Klemmbacken aufeinander zu über die von dem Klemmbacken-Verstellmechanismus vorgegebene Stellung hinaus wird zweckmäßigerweise durch einen (verstellbaren) Anschlag begrenzt. Dieser ist nicht nur geeignet, die von den Klemmbacken auf den Schlauch ausgeübte Klemmkraft zu begrenzen. Insbesondere kann er auch ein - unter bestimmten ungünstigen Bedingungen sonst ggf. mögliches - ungewolltes Umschlagen der Klemmbacken beim Ein-/Aufpressen der Armatur über den Totpunkt der Parallellenkeranordnungen hinaus verhindern. Der besagte Anschlag ist dabei besonders bevorzugt deaktivierbar, um ein gewolltes Umlegen der Klemmbacken über den Totpunkt der Parallellenkeranordnungen hinaus zu ermöglichen, wie es für das Umschalten der Vorrichtung von einem Ein-/Aufpressbetrieb in einen dem Heraus-/Abziehen der Armatur aus/von dem Schlauch (s. u.) dienenden Abziehbetrieb erforderlich ist.

Soweit im Folgenden die vorliegende Erfindung anhand einer bevorzugten Ausgestaltung mit zwei - typischerweise einander diametral gegenüberliegenden - Klemmbacken erläutert wird, so liegt darin keine Beschränkung der Erfindung auf genau diese Anzahl an Klemmbacken; denn die Erfindung kann in entsprechender Weise auch mit einer drei oder mehr Klemmbacken aufweisenden Schlauch-Klemmeinrichtung umgesetzt werden, wobei der bei einer größeren Anzahl an Klemmbacken erhöhte bauliche Aufwand beispielsweise durch die weiter reduzierte Gefahr eines Ausbrechens des Schlauches beim Aufpressen der Armatur gerechtfertigt sein kann.

Ferner ist zur Vermeidung von Fehlvorstellungen vorsorglich darauf hinzuweisen, dass die Angabe, wonach die Erfindung eine Vorrichtung zum Anbringen einer Armatur endseitig an einem Schlauch zum Gegenstand hat, nicht bedeutet, dass ausschließlich diese Verwendung vom Schutz erfasst ist. Denn die erfindungsgemäße Vorrichtung lässt sich, ohne dass es einer konzeptionellen oder strukturellen Modifikation bedarf, in gleicher Weise namentlich für das Anbringen einer Armatur endseitig an einem Rohr oder einer Stange verwenden. Vor diesem Hintergrund ist die Angabe "Vorrichtung zum Anbringen einer Armatur endseitig an einem Schlauch" vorliegend so zu verstehen, dass sie dem Anbringen einer Armatur endseitig an einem Rohr, einer Stange oder einer vergleichbaren Struktur dienende Vorrichtungen mit umfasst.

Gemäß einer ersten bevorzugten Weiterbildung der Erfindung ist eine Rückstellfeder vorgesehen, gegen deren Kraft eine über die von dem Klemmbacken-Verstellmechanismus vorgegebene Stellung hinausgehende die Annäherung der Klemmbacken zueinander (bzw. an die Achse des Schlauches) erfolgt. Die besagte Rückstellfeder hat bei geeigneter Ausgestaltung eine Doppelfunktion, indem sie nicht nur (bei nachlassender axialer Krafteinwirkung auf den Schlauch) eine Rückstellung der Klemmbacken in Richtung auf die von dem Klemmbacken-Verstellmechanismus vorgegebene Stellung bzw. bis zu dieser - und somit ein entsprechendes Nachlassen der Klemmkraft - bewirkt, sondern auch das Öffnen der Klemmbacken und deren zuverlässiges Abheben von dem Schlauch unterstützt, wenn der Klemmbacken-Verstellmechanismus im Sinne eines Öffnens der Schlauch-Klemmeinrichtung verstellt wird.

Eine andere bevorzugte Weiterbildung der vorliegenden Erfindung zeichnet sich dadurch aus, dass der Klemmbacken-Verstellmechanismus einen Spindel-Verstellantrieb umfasst. Ein besonderer Vorteil dieser Ausgestaltung ist das üblichen Spindelantrieben immanente Prinzip der Selbsthemmung, wodurch die Fixierung des Schlauches während des gesamten Ein-/Aufpressens der Armatur ohne äußere Kräfte aufrechterhalten bleibt. In einer besonderen Ausgestaltung kann dabei der Spindel-Verstellantrieb zwei gegenläufige, identische Steigungen aufweisende Spindelabschnitte umfassen. Hierdurch lässt sich der Synchronisierungsmechanismus baulich-konstruktiv in den Klemmbacken-Verstellmechanismus integrieren.

Statt der baulich-konstruktiven Integration des Synchronisierungsmechanismus' in den Klemmbacken-Verstellmechanismus kann jedoch auch - gemäß einer besonders bevorzugten Weiterbildung der vorliegenden Erfindung - der Synchronisierungsmechanismus baulich-konstruktiv unabhängig sein von dem Klemmbacken-Verstellmechanismus. Auf diese Weise wird ermöglicht, mit einem einzigen, gemeinsamen Freilauf für beide Klemmbacken auszukommen, was unter Funktions- und Kostengesichtspunkten, insbesondere aber auch im Hinblick auf möglichst geringe Abmessungen bzw. eine besonders günstige Ausnutzung des bestehenden Raumangebots vorteilhaft ist. So wird letztendlich auch der Gestaltungsspielraum deutlich erweitert, was eine besonders flexible Anpassung der Vorrichtung an die sonstigen Gegebenheiten ermöglicht. Ein solcher von dem Klemmbacken-Verstellmechanismus unabhängiger Synchronisierungsmechanismus kann insbesondere eine (separate) Zahnstangen-Zahnrad-Koppelung umfassen, die sich bei hoher Zuverlässigkeit, hohen übertragbaren Kräften und einem guten Wirkungsgrad durch einen besonders geringen Platzbedarf auszeichnet.

Im Rahmen der vorliegenden Erfindung lassen sich verschiedene Konzeptionen realisieren, was die Wirkungsweise des Klemmbacken-Verstellmechanismus' angeht. So können Widerlager vorgesehen sein, deren Abstand zueinander veränderbar ist, wobei der Verstellantrieb auf die Widerlager wirkt, um deren Abstand zueinander einzustellen. Für die meisten typischen Anwendungssituationen ist jedoch eine andere Ausgestaltung als vorteilhaft anzusehen, bei der nämlich der Abstand der Widerlager zueinander unveränderbar ist und der Verstellantrieb direkt auf die Klemmbacken wirkt. Einer der Vorteile dieser Ausgestaltung besteht in dem - aufgrund günstiger statischer Verhältnisse infolge des Kraftschlusses zwischen den Widerlagern allein über starr miteinander verbundene Bauteile - deutlich geringeren baulichen Aufwand, verglichen mit der an erster Stelle genannten Variante mit verstellbaren Widerlagern.

Zur Anpassung bzw. Optimierung der Hebelverhältnisse im Sinne einer besonders günstigen Beziehung zwischen der axial auf den Schlauch wirkenden Einschubkraft und der durch die Klemmbacken ausgeübten Klemmkraft weisen die Klemmbacken bevorzugt jeweils eine Schale und einen darin auswechselbar aufgenommenen Klemmeinsatz auf. Dabei werden die Klemmeinsätze besonders bevorzugt mittels einer magnetischen Klemmeinsatz-Fixierung an der zugeordneten Schale gehalten. Der erfindungsgemäßen Vorrichtung ist dabei bevorzugt ein Satz unterschiedlich dimensionierter Klemmeinsatzpaare zugeordnet, wodurch sich - durch Auswahl geeigneter Klemmeinsätze - die Vorrichtung unter Optimierung der geometrischen Verhältnisse der beiden Parallellenkeranordnungen an den jeweiligen Schlauch anpassen lässt. Zusätzlich kann ggf. vorgesehen sein, dass der Vorrichtung auch ein Satz unterschiedlich dimensionierter Lenker für die Parallellenkeranordnungen zugeordnet ist und dass sich die Lenker der Parallellenkeranordnungen ohne großen Aufwand wechseln lassen. Durch Veränderung der Länge der Lenker der Parallellenkeranordnungen ist eine (weitere) Möglichkeit der Optimierung der Hebelverhältnisse im Sinne einer besonders günstigen Beziehung zwischen der axial auf den Schlauch wirkenden Einschubkraft und der durch die Klemmbacken ausgeübten Klemmkraft gegeben.

Gemäß einer wiederum anderen bevorzugten Weiterbildung der Erfindung weist die erfindungsgemäße Vorrichtung eine Grundstruktur in Form eines Schlittens, der sich verfahrbar auf Linearführungen, insbesondere in Form von Schienen abstützt. Auf dem betreffenden Schlitten, auf den der Antriebsmechanismus einwirkt, kann dabei insbesondere die Schlauch-Klemmeinrichtung angeordnet sein. Ebenso kommt im Rahmen der Erfindung in Betracht, dass auf dem betreffenden Schlitten, auf den der Antriebsmechanismus einwirkt, der Armatur-Halter angeordnet ist. Gemäß einer dritten Ausgestaltung können zwei sich verfahrbar auf Linearführungen abstützende schlittenartige Grundstrukturen vorgesehen sein, wobei der Antriebsmechanismus zwischen den beiden Schlitten wirkt und auf dem einen Schlitten die Schlauch-Klemmeinrichtung angeordnet ist und auf dem anderen Schlitten der Armatur-Halter. Dabei können die beiden Schlitten besonders bevorzugt auf den identischen Linearführungen geführt sein. Ist demgegenüber nur ein Schlitten vorgesehen (s. o.), so stützt sich der Antriebsmechanismus gegenüberliegend zu dem Schlitten an einer Basis ab, an der - bei verfahrbarer Schlauch-Klemmeinrichtung - der Armaturen-Halter bzw. - bei verfahrbarem Armaturen-Halter - die Schlauch-Klemmeinrichtung angebracht ist.

Im Rahmen der vorliegenden Erfindung kann der (dem Bewegen des Armatur-Halters relativ zu der Schlauch-Klemmeinrichtung zumindest im Wesentlichen parallel zur Achse eines in der Schlauch-Klemmeinrichtung aufgenommenen Schlauches dienende) Antriebsmechanismus unterschiedlich ausgestaltet sein. Neben hydraulisch arbeitenden Antriebsmechanismen, die für das kontrollierte kraftvolle, langsame, stoßfreie Auf-/Einschieben der Armatur auf/in den Schlauch ganz besonders günstig sind, kommen beispielsweise auch elektrische Antriebe in Betracht. Im Falle eines hydraulischen Antriebskonzepts umfasst der Antriebmechanismus besonders bevorzugt zwei parallel zueinander angeordnete und wirkende hydraulische Zylinder-Kolben-Einheiten. Die beiden Zylinder-Kolben-Einheiten sind dabei besonders bevorzugt so positioniert, dass in der durch ihre Achsen aufgespannten Ebene auch die (Mittel-)Achse eines in die Schlauch-Klemmeinrichtung eingelegten Schlauches liegt. So wird ein symmetrischer, mittiger, einer Verkantung entgegenwirkender Kraftschluss innerhalb der Vorrichtung erreicht. In diesem Zusammenhang ist ganz besonders vorteilhaft, wenn jede Parallellenkeranordnung zwei Lenkerpaare umfasst, wobei die Zylinder-Kolben-Einheiten jeweils - zwischen den beiden Lenkern des betreffenden Paares - an einem Schwenkbolzen angreifen, welcher die Schwenkachse für ein zugeordnetes Lenkerpaar definiert. (Vorstehende Ausgestaltung lässt sich erkennbar mit gleichem Vorteil auch bei nicht-hydraulischen Antriebskonzepten anwenden, beispielsweise bei Verwendung von zwei elektrischen Spindelantrieben.)

Im Interesse einer im Sinne eines günstigen Kraftschlusses (s. o.) optimalen Positionierung des Schlauches weist die erfindungsgemäße Vorrichtung besonders bevorzugt verstellbare, an die Dimensionierung des Schlauches anpassbare Stütz- und Führungselemente für den Schlauch auf.

Zur Vermeidung von Fehlvorstellungen ist vorsorglich darauf hinzuweisen, dass zwar in vielen üblichen Anwendungsfällen der Erfindung die Klemmbacken - durch entsprechende Gestaltung ihrer Klemmflächen - zum Klemmen eines geraden Schlauches (oder eines geraden Rohres bzw. einer geraden Stange; s. o.) ausgeführt sein werden, dass dies indessen keinesfalls zwingend ist. Vielmehr können die Klemmbacken - durch entsprechende Profilierung ihrer Klemmflächen - auch für das Klemmen eines gekrümmten/gebogenen Schlauches, eines Rohrbogens bzw. einer gekrümmten/gebogenen Stange etc. hergerichtet sein. Die Angabe, wonach die erfindungsgemäße Vorrichtung "einen Antriebsmechanismus zum Bewegen des Armatur-Halters relativ zu der Schlauch-Klemmeinrichtung zumindest im Wesentlichen parallel zur Achse eines in der Schlauch-Klemmeinrichtung aufgenommenen Schlauches" aufweist, ist bei solchen nicht-geraden Schläuchen, Rohren, Stangen, etc. und bei an solche Werkstücke angepassten Klemmeinrichtungen so zu verstehen, dass die Achsrichtung des Schlauches, des Rohres oder der Stange an dem dem Armaturen-Halter zugewandten, bestimmungsgemäß mit der Armatur zu bestückenden Ende maßgeblich ist.

Im Folgenden wird die vorliegende Erfindung anhand der Zeichnung näher erläutert. Dabei zeigt
- Fig. 1: in perspektivischer Ansicht ein bevorzugtes Ausführungsbeispiel einer erfindungsgemäßen Vorrichtung,
- Fig. 2: einen Horizontalschnitt durch die Vorrichtung nach Fig. 1 auf Höhe der Linie II-II in Fig. 1 und
- Fig. 3: Details der Klemmeinrichtung der Vorrichtung nach den Figuren 1 und 2.

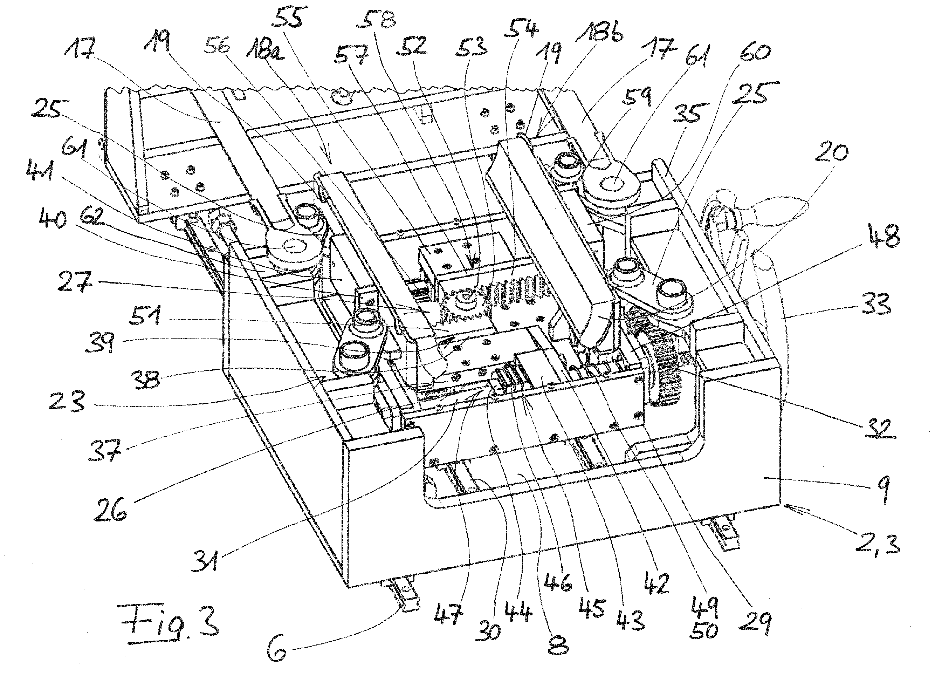

Die in der Zeichnung veranschaulichte, für den Aufbau auf einem (nicht dargestellten) Maschinenbett bestimmte Vorrichtung zum Anbringen einer Armatur 1 endseitig an einem Schlauch umfasst eine erste Grundstruktur 2 in Form eines ersten Schlittens 3 und eine zweite Grundstruktur 4 in Form eines zweiten Schlittens 5. Die beiden Schlitten 3, 5 sind auf zwei Linearführungen 6 in Form von auf dem Maschinenbett montierten Führungsschienen 7 verschiebbar geführt. Sie sind jeweils den statischen Anforderungen entsprechend ausgeführt mit einer Bodenplatte 8, Wandabschnitten 9, Deckelabschnitten 10 und Aussteifungsstegen, -rippen und -blechen 11. Der erste Schlitten 3 ist mit einer Klemmeinrichtung 12 für den Schlauch ausgestattet und der zweite Schlitten 5 mit einem Halter 13 für die an dem Schlauch anzubringende Armatur 1. Weiterhin umfasst die Vorrichtung einen Antriebsmechanismus 14 zum Bewegen der beiden Schlitten 3, 5 bezüglich einander längs der Orientierung der Linearführungen 6, d. h. zum Bewegen der an dem ersten Schlitten 3 angeordneten Schlauch-Klemmeinrichtung 12 relativ zu dem an dem zweiten Schlitten 5 angeordneten Armatur-Halter 13. Der Antriebsmechanismus 14 umfasst zwei hydraulische Zylinder-Kolben-Einheiten 15. Die Zylinder 16 der beiden Zylinder-Kolben-Einheiten 15 sind an dem zweiten Schlitten 5 fixiert und die beiden Kolbenstangen 17 an dem ersten Schlitten 3. Details der Anlenkung der Kolbenstangen 17 an dem ersten Schlitten 3 sind in Fig. 3 erkennbar und werden weiter unten näher erläutert.

Die Schlauch-Klemmeinrichtung 12 umfasst zwei Klemmbacken 18 zur Fixierung des mit der Armatur 1 zu bestückenden Schlauchs mit einer sich parallel zu der Ausrichtung der Linearführungen 6 erstreckenden Orientierung. Jede Klemmbacke 18 besteht aus einer Schale 19 und einem daran auswechselbar fixierbaren Klemmeinsatz 20, wobei die beiden Klemmeinsätze 20 jeweils eine auf den Außendurchmesser des zu fixierenden Schlauches abgestimmte konkav gewölbte Klemmfläche 21 aufweisen. Jede der beiden Klemmbackenschalen 19 stützt sich über eine Parallellenkeranordnung 22 bewegbar an einem Widerlager 23 ab, welches fester Teil der ersten Grundstruktur 2 bzw. des ersten Schlittens 3 ist. Jede der beiden Parallellenkeranordnungen 22 umfasst dabei zwei Lenkerpaare 24, d. h. zwei Paare von jeweils übereinander angeordneten, gemeinsam bezüglich der jeweiligen Schwenkachsen A verschwenkbaren Lenkern 25.

Die Vorrichtung umfasst einen Klemmbacken-Verstellmechanismus 26 sowie einen die Bewegung der Klemmbacken 18 spiegelsymmetrisch zu der - zu der Orientierung der Linearführungen 6 parallelen - Maschinenachse X koordinierenden Synchronisierungsmechanismus 27. Details hierzu sind insbesondere in Fig. 3 veranschaulicht, welche einen Horizontalschnitt durch den ersten Schlitten 3 auf Höhe der Maschinenachse X zeigt, und zwar bei entferntem Deckel 28 des Kastens 29, der in dem ersten Schlitten 3 über die Linearführungen 30 verschiebbar geführt ist und wesentliche Komponenten des Klemmbacken-Verstellmechanismus' 26 sowie des Synchronisierungsmechanismus' 27 beherbergt. Der (durch den Bediener betätigbare) Klemmbacken-Verstellmechanismus 26 umfasst eine in dem Kasten 29 quer zur Maschinenachse X drehbar gelagerte Gewindespindel 31, welche - unter Zwischenschaltung eines Stirnradgetriebes 32 - mittels eines seitlich an dem ersten Schlitten 3 angeordneten Handrades 33 gedreht werden kann. Entsprechend der Verschiebbarkeit des Kastens 29 in dem ersten Schlitten 3 längs der Linearführungen 30 tritt die das Handrad 33 tragende Welle 34 durch ein in der entsprechenden Seitenwand 35 vorgesehenes Langloch 36 hindurch seitwärts aus der ersten Grundstruktur 2 aus.

Auf einer an einer Bodenplatte des Kastens 29 angebrachten, sich parallel zur Gewindespindel 31 erstreckenden - nicht dargestellten - Linearführung ist ein erster Schieber 37 quer zur Maschinenachse X verschiebbar geführt. Mit dem ersten Schieber 37 ist ein Schenkel 38 eines winkelförmigen Koppelstücks 39 verbunden, dessen anderer Schenkel 40 über den Aussteifungsblock 41 außen an der Schale 19 der (in Fig. 3 links dargestellten) ersten Klemmbacke 18a angebracht ist. So sind die Bewegungen von erstem Schieber 37 und zugeordneter erster Klemmbacke 18a direkt gekoppelt. Mit dem ersten Schieber 37 ist weiterhin ein Koppelstück 42 starr verbunden, an welchem seinerseits ein - von der Gewindespindel 31 durchdrungener - Klotz 43 angebracht ist. Der Klotz 43 wirkt als Anschlag für eine Spindelmutter 44, welche drehfest aber axial verschiebbar in einer an der Bodenplatte des Kastens 29 fixierten Aufnahme 45 aufgenommen ist. Die Aufnahme 45 besteht dabei aus drei zu einem Block geschichteten Einzelblechen 46, was zu einer gewissen federnden Nachgiebigkeit führt. Durch die vorstehend dargelegten Teile und deren Zusammenwirken ist ein Freilauf 47 in dem Sinne realisiert, dass über den Klemmbacken-Verstellmechanismus 26 (durch Verdrehen des Handrades 33) die erste Klemmbacke 18a zwingend - unter stirnseitiger Anlage der Spindelmutter 44 an dem Klotz 43 - in Richtung auf die Maschinenachse X bewegt werden kann, dass aber - unter Abheben der Spindelmutter 44 von dem Klotz 43 und Verschieben der Spindelmutter 44 in der Aufnahme 45 - eine über die von dem Klemmbacken-Verstellmechanismus 26 vorgegebene Stellung hinausgehende Annäherung der ersten Klemmbacke 18a an die Maschinenachse X möglich ist. Eine zwischen dem Koppelstück 42 und der benachbarten Seitenwand 48 des Kastens 29 eingespannte, die Gewindespindel 31 umgebende Schrauben-Druckfeder 49 wirkt dabei als Rückstellfeder 50, welche bei Abwesenheit äußerer Kräfte den Klotz 43 gegen die Spindelmutter 44 drückt und so die erste Klemmbacke 18a in eine Richtung weg von der Maschinenachse X vorspannt. Eine über die durch den Klemmbacken-Verstellmechanismus 26 vorgegebene Stellung hinausgehende Annäherung der ersten Klemmbacke 18a an die Maschinenachse X erfolgt somit gegen die Rückstellkraft der Rückstellfeder 50.

Der Synchronisierungsmechanismus 27, welcher die Bewegung der zweiten Klemmbacke 18b mit der Bewegung der ersten Klemmbacke 18a dergestalt koordiniert, dass sich beide Klemmbacken 18a, 18b stets spiegelsymmetrisch zu der Maschinenachse X bewegen, umfasst eine mit dem ersten Schieber 37 fest verbundene erste Zahnstange 51, ein mit dieser kämmendes, auf einer an der Bodenplatte des Kastens angebrachten Welle 52 frei drehbares Zwischenrad 53 und eine mit letzterem kämmende zweite Zahnstange 54, die ihrerseits mit einem zweiten Schieber 55 fest verbunden ist, welcher - analog dem ersten Schieber 37 - auf einer an einer Bodenplatte des Kastens 29 angebrachten, sich parallel zur Gewindespindel 31 erstreckenden Linearführung 56 quer zur Maschinenachse X verschiebbar geführt ist. Mit dem zweiten Schieber 55 ist - analog zum ersten Schieber 37 - ein Schenkel 57 eines winkelförmigen Koppelstücks 58 verbunden, dessen anderer Schenkel 59 über den Aussteifungsblock 60 außen an der Schale 19 der (in Fig. 3 rechts dargestellten) zweiten Klemmbacke 18b angebracht ist.

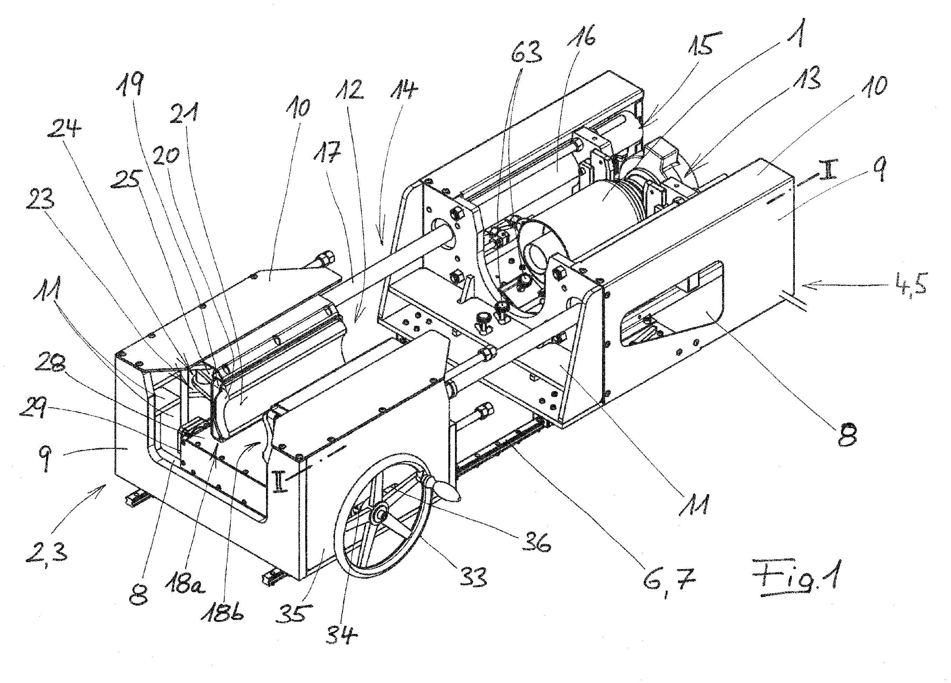

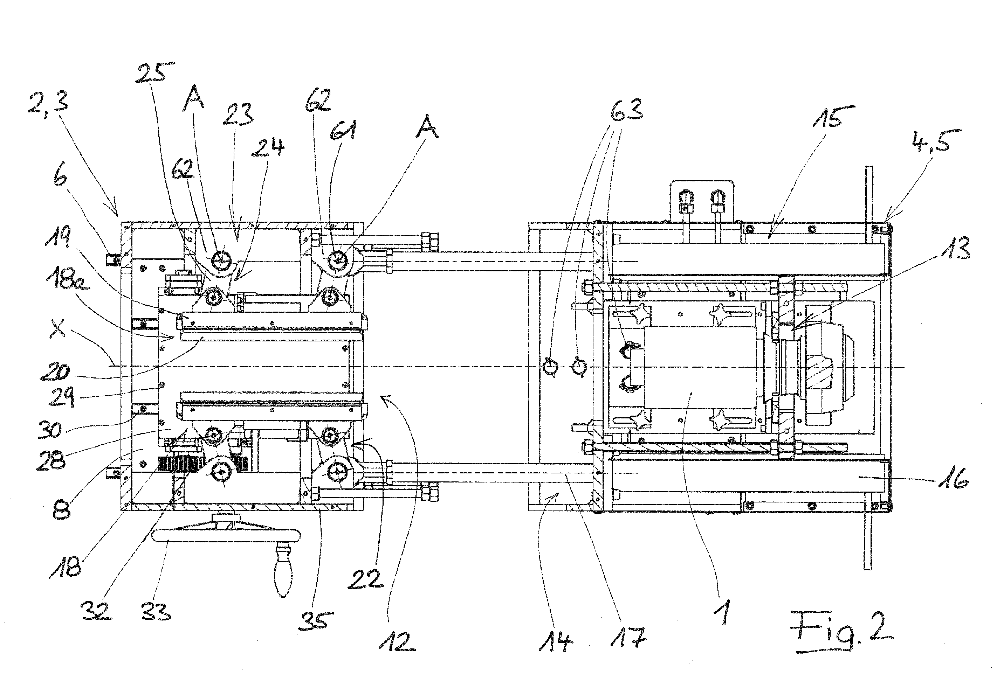

Im Vergleich mit Figur 3 lassen die Figuren 1 und 2 erkennen, dass die Lenker 25 der Parallellenkeranordnungen 22 über ihren Totpunkt, der die der Maschinenachse X am nächsten kommende Stellung der Klemmbacken 18a, 18b markiert, hinaus verschwenkbar sind, so dass sowohl eine Selbstklemmung beim Anbringen einer Armatur 1 an einem Schlauch (vgl. Fig. 3) als auch beim Abziehen einer Armatur 1 von einem Schlauch (vgl. Figuren 1 und 2) möglich ist. Im Übrigen zeigt Fig. 3 die besondere Ausgestaltung der Anlenkung der Kolbenstangen 17 der hydraulischen Zylinder-Kolben-Einheiten 15 an dem ersten Schieber 3, indem nämlich jede der Kolbenstangen 17 - zwischen den beiden Lenkern 25 des betreffenden Lenkerpaares 24 - an einem Schwenkbolzen 61 angreift, der in den beiden dem Widerlager 23 zugeordneten Lagerblechen 62 gelagert ist und die widerlagerseitige Schwenkachse A für das zugeordnete Lenkerpaar 24 definiert.

Erkennbar sind in Fig. 1 auch noch vier an der zweiten Grundstruktur 4 vorgesehene verstellbare Stütz- und Führungselemente 63 für den Schlauch, um diesen endseitig in einer zu der Maschinenachse X und der Armatur 1 fluchtenden Position zu halten.

## Patentansprüche

1. Vorrichtung zum Anbringen einer Armatur (1) endseitig an einem Schlauch, umfassend eine Klemmeinrichtung (12) für den Schlauch, einen Halter (13) für die Armatur (1) und einen Antriebsmechanismus (14) zum Bewegen des Armatur-Halters (13) relativ zu der Schlauch-Klemmeinrichtung (12) zumindest im Wesentlichen parallel zur Achse eines in der Schlauch-Klemmeinrichtung (12) aufgenommenen Schlauches, mit den folgenden Merkmalen:
- die Schlauch-Klemmeinrichtung (12) umfasst mindestens zwei Klemmbacken (18), die sich jeweils mittels einer Parallellenkeranordnung (22) bewegbar an einem Widerlager (23) abstützen, wobei die Widerlager (23) ihrerseits Teile einer Grundstruktur (2) sind, auf welche der Antriebsmechanismus (14) einwirkt;
- es sind ein Klemmbacken-Verstellmechanismus (26) sowie ein die Bewegung der Klemmbacken (18) spiegelsymmetrisch koordinierender Synchronisierungsmechanismus (27) vorgesehen;
- zwischen dem Klemmbacken-Verstellmechanismus (26) und den Klemmbacken (18) wirkt ein Freilauf (45) dergestalt, dass eine über die von dem Klemmbacken-Verstellmechanismus (26) vorgegebene Stellung hinausgehende Annäherung der Klemmbacken (18) zueinander möglich ist.

2. Vorrichtung nach Anspruch 1, **dadurch gekennzeichnet, dass** eine Rückstellfeder (50) vorgesehen ist, gegen deren Kraft eine über die von dem Klemmbacken-Verstellmechanismus (26) vorgegebene Stellung hinausgehende die Annäherung der Klemmbacken (18) zueinander erfolgt.

3. Vorrichtung nach Anspruch 1 oder Anspruch 2, **dadurch gekennzeichnet, dass** der Klemmbacken-Verstellmechanismus (26) einen Spindel-Verstellantrieb umfasst.

4. Vorrichtung nach Anspruch 3, **dadurch gekennzeichnet, dass** der Synchronisierungsmechanismus in den Klemmbacken-Verstellmechanismus integriert ist, indem der Spindel-Verstellantrieb zwei gegenläufige Spindelabschnitte umfasst.

5. Vorrichtung nach einem der Ansprüche 1 bis 3, **dadurch gekennzeichnet, dass** ein von dem Klemmbacken-Verstellmechanismus (26) unabhängiger Synchronisierungsmechanismus (27) vorgesehen ist, welcher bevorzugt eine Zahnstangen-Zahnrad-Koppelung der Klemmbacken (18) umfasst.

6. Vorrichtung nach einem der Ansprüche 1 bis 5, **dadurch gekennzeichnet, dass** der Abstand der Widerlager zueinander veränderbar ist und der Klemmbacken-Verstellmechanismus auf die Widerlager einwirkt.

7. Vorrichtung nach einem der Ansprüche 1 bis 5, **dadurch gekennzeichnet, dass** der Abstand der Widerlager (23) zueinander unveränderbar ist und der Klemmbacken-Verstellmechanismus (26) direkt auf die Klemmbacken (18) einwirkt.

8. Vorrichtung nach einem der Ansprüche 1 bis 7, **dadurch gekennzeichnet, dass** eine als Schlitten (3; 5) ausgeführte Grundstruktur (2; 4) vorgesehen ist, die sich verfahrbar auf Linearführungen (6), insbesondere in Form von Schienen abstützt.

9. Vorrichtung nach einem der Ansprüche 1 bis 8, **dadurch gekennzeichnet, dass** ein nicht-hydraulischer Antriebsmechanismus vorgesehen ist.

10. Vorrichtung nach einem der Ansprüche 1 bis 8, **dadurch gekennzeichnet, dass** der Antriebmechanismus zwei hydraulische Zylinder-Kolben-Einheiten (15) umfasst.

11. Vorrichtung nach Anspruch 10, **dadurch gekennzeichnet, dass** die Parallellenkeranordnungen (22) jeweils zwei Lenkerpaare (24) umfassen, wobei die hydraulischen Zylinder-Kolben-Einheiten (15) jeweils an einem Schwenkbolzen (61) angreifen, welcher die Schwenkachse (A) für ein zugeordnetes Lenkerpaar (24) definiert.

12. Vorrichtung nach Anspruch 10 oder Anspruch 11, **dadurch gekennzeichnet, dass** Zylinder (16) der hydraulischen Zylinder-Kolben-Einheiten (15) an einer Basis bzw. dem Grundkörper (4) fixiert sind, an welcher/welchem auch der Armaturen-Halter (13) angebracht ist.

13. Vorrichtung nach Anspruch 12, **dadurch gekennzeichnet, dass** an der Basis bzw. dem den Armaturen-Halter (13) tragenden Grundkörper (4) verstellbare Stütz- und Führungselemente (63) für den Schlauch vorgesehen sind.

14. Vorrichtung nach einem der Ansprüche 1 bis 13, **dadurch gekennzeichnet, dass** die Klemmbacken (18) jeweils eine Schale (19) und einen daran auswechselbar fixierbaren Klemmeinsatz (20) aufweisen, wobei die Fixierung der Klemmeinsätze (20) an der jeweils zugeordneten Schale (19) bevorzugt mittels magnetischer Klemmeinsatz-Fixierungen erfolgt.

15. Vorrichtung nach einem der Ansprüche 1 bis 14, **dadurch gekennzeichnet, dass** die Lenker (25) der Parallellenkeranordnungen (22) über ihren Totpunkt hinaus verschwenkbar sind.
